# EUROPEAN PATENT APPLICATION

(11) **EP 3 777 991 A1**
(43) Date of publication of application: **17.02.2021**
(21) Application number: 19777006.8
(22) Date of filing: 25.03.2019
(51) Int. Cl.: B01D 39/16, D04H 1/407, D04H 1/4309, D04H 1/435, D21H 13/10

(54) **WET NON-WOVEN FABRIC FOR FILTER, FILTER MEDIUM FOR FILTER, AND FILTER**

(30) Priority: 30.03.2018 JP 2018068385; 30.03.2018 JP 2018068398
(71) Applicant: TOYOBO CO., LTD., Osaka-shi Osaka 530-8230 (JP)
(72) Inventor: TAKAMI, Kento, Otsu-shi, Shiga 520-0292 (JP); HIDAKA, Yusuke, Otsu-shi, Shiga 520-0292 (JP)
(74) Representative: Vossius & Partner Patentanwälte Rechtsanwälte mbB
(86) International application number: PCT/JP2019/012395
(87) International publication number: WO 2019/188923

(57) **Abstract**

The wet non-woven fabric for a filter of the present invention comprises vinylon, polyester, and polyvinyl alcohol, the wet non-woven fabric comprises 10 to 20% by weight of the polyvinyl alcohol, and a surface, of the wet non-woven fabric, that is located on an upstream side of air flow has a surface roughness (SMD) of not larger than 2.7 µm.

## Description

### TECHNICAL FIELD

The present invention relates to a wet non-woven fabric for a filter, a filter medium for a filter, and a filter that are excellent in removal of a foreign object having adhered thereto.

### BACKGROUND ART

In recent years, regarding filters for air conditioning, air conditioners, automobiles, and the like, demand for filter mediums to have higher performance and to be lower in cost has increased, and many studies have been conducted for filter mediums for filters that achieve both dust removal performance and deodorization performance (see, for example, Patent Literatures 1 to 3). For even higher functionality, demand for filters that enable easy removal of a foreign object having adhered thereto has also increased. However, foreign objects cannot be easily removed, and thus reuse of filters is difficult in the present circumstances. Regarding reuse of filters, for example, there has been a powder dust removal method that uses a suction nozzle (Patent Literature 4).

### PRIOR ART DOCUMENT

### PATENT DOCUMENTS

[PTL 1] Japanese Laid-Open Patent Publication No. H11-5058
[PTL 2] Japanese Laid-Open Patent Publication No. H3-98642
[PTL 3] Japanese Laid-Open Patent Publication No. 2001-218824
[PTL 4] Japanese Laid-Open Patent Publication No. 2014-136475

### SUMMARY OF THE INVENTION

### PROBLEMS TO BE SOLVED BY THE INVENTION

However, if a foreign object is removed by using a suction nozzle, a problem arises in that the filter is deformed and the performance thereof is not sufficiently restored.

Thus, the present invention has been made in view of the above-described problems, and an object of the present invention is to provide a wet non-woven fabric for a filter, a filter medium for a filter, and a filter that enable easy removal of a foreign object having adhered thereto and that can be reused.

### SOLUTIONS TO THE PROBLEMS

The present inventors conducted earnest studies and found that the above-described problems can be solved with means described below. Accordingly, the present inventors arrived at the present invention.

Specifically, the present invention is as follows.
(1) A wet non-woven fabric for a filter, wherein the wet non-woven fabric comprises vinylon, polyester, and polyvinyl alcohol, and a surface, of the wet non-woven fabric, that is located on an upstream side of air flow has a surface roughness (SMD) of not larger than 2.7 µm.
(2) The wet non-woven fabric for a filter according to the above (1), wherein the surface located on the upstream side of air flow has an average friction coefficient (MIU) of not larger than 0.15.
(3) The wet non-woven fabric for a filter according to the above (1) or (2), the wet non-woven fabric comprises 10 to 20% by weight of the polyvinyl alcohol.
(4) The wet non-woven fabric for a filter according to any one of the above (1) to (3), the wet non-woven fabric comprises a fiber having a length of not longer than 30 mm.
(5) The wet non-woven fabric for a filter according to any one of the above (1) to (4), the wet non-woven fabric comprises 0.001 to 0.1% by weight of a polyacrylic acid ester.
(6) A filter in which the wet non-woven fabric for a filter according to any one of the above (1) to (5) is used.
(7) A filter medium for a filter having a laminate structure in which a long-fiber non-woven fabric and the wet non-woven fabric for a filter according to any one of the above (1) to (5) are stacked.
(8) The filter medium for a filter according to the above (7),
   wherein the long-fiber non-woven fabric is a spunbonded non-woven fabric.
(9) The filter medium for a filter according to the above (7) or (8), wherein an adsorbent is held between the long-fiber non-woven fabric and the wet non-woven fabric.
(10) A filter in which the filter medium for a filter according to any one of the above (7) to (9) is used.

### EFFECTS OF THE INVENTION

In the wet non-woven fabric for a filter of the present invention, the surface located on the upstream side of air flow is even, and thus a foreign object can be easily removed. Therefore, it is possible to easily clean a filter medium for a filter, and a filter, in which the wet non-woven fabric for a filter of the present invention is used.

### MODE FOR CARRYING OUT THE INVENTION

Hereinafter, an embodiment of the present invention will be described in detail.

A wet non-woven fabric of the present embodiment comprises vinylon, polyester, and polyvinyl alcohol. The wet non-woven fabric contains 10 to 20% by weight of the polyvinyl alcohol. A surface, of the wet non-woven fabric, that is located on the upstream side of air flow has a surface roughness (SMD) not larger than 2.7 µm. The wet non-woven fabric is used for a filter medium for a filter, and a filter.

In the present specification, the surface roughness refers to the value of SMD indicative of an average deviation from data of surface irregularity measured in an assessment using a friction tester (KES-SE) manufactured by KATO TECH CO., LTD. A larger value of the SMD indicates that the surface is rougher and more irregular.

In the wet non-woven fabric of the present embodiment, the surface located on the upstream side of air flow has a surface roughness (SMD) of not larger than 2.7 µm. If the surface roughness is larger than 2.7 µm, a foreign object having adhered to the wet non-woven fabric is difficult to remove owing to the irregularity of the surface.

In the present specification, an average friction coefficient refers to the value of average friction coefficient (MIU) indicative of the extent of surface slipperiness measured in an assessment using the friction tester (KES-SE) manufactured by KATO TECH CO., LTD. A smaller value of the MIU indicates that the surface is more slippery.

In the wet non-woven fabric of the present embodiment, the MIU indicative of the average friction coefficient of the surface located on the upstream side of air flow is 0.15. If the MIU is larger than 0.15, a foreign object having adhered to the wet non-woven fabric is difficult to remove owing to friction on the surface.

The average diameter of fibers forming the wet non-woven fabric of the present embodiment is preferably 1 to 100 µm and more preferably 5 to 50 µm. If the average diameter of the constituent fibers is smaller than 1 µm, gaps between the fibers are also narrowed. Accordingly, dust in the air accumulates on a cover layer, whereby the air-flow resistance rapidly increases. Meanwhile, if the average diameter of the constituent fibers is larger than 100 µm, a foreign object is difficult to remove.

The length of each of the fibers forming the wet non-woven fabric of the present embodiment is preferably not longer than 30 mm. If the length of each of the fibers is longer than 30 mm, the fibers become more likely to be oriented in the thickness direction, whereby the surface roughness increases.

The thickness of the wet non-woven fabric of the present embodiment is preferably 0.1 to 3.0 mm. If the thickness is smaller than 0.1 mm, a problem arises in terms of contexture. Meanwhile, if the thickness is larger than 3.0 mm, the thickness of the entire filter is excessively large, and the structural resistance increases if the filter is formed in a pleated manner. As a result, the air-flow resistance of the entire filter becomes excessively high, and a problem arises in practical use.

The weight per unit area of the wet non-woven fabric of the present embodiment is preferably 10 to 100 g/m² and more preferably 20 to 80 g/m². If the weight per unit area is lower than 10 g/m², the contexture deteriorates. Meanwhile, if the weight per unit area is higher than 100 g/m², the thickness becomes large, and the structural resistance increases at the time of pleating when the wet non-woven fabric is used for a filter.

Regarding a raw material of a fiber structure forming the wet non-woven fabric of the present embodiment, the fiber structure is formed from vinylon, polyester, and polyvinyl alcohol. Here, the fiber structure preferably contains 10 to 20% by weight of the polyvinyl alcohol. If the proportion of the polyvinyl alcohol is lower than 10%, the stiffness and the strength of the wet non-woven fabric are low, and further, surface smoothness is less likely to be obtained. Meanwhile, if the proportion is higher than 20% by weight, the air-flow resistance increases.

The wet non-woven fabric of the present embodiment preferably contains 0.001 to 0.1% by weight of a polyacrylic acid ester. If the proportion of the polyacrylic acid ester is lower than 0.001%, surface smoothness and surface slipperiness are not improved. Meanwhile, if the proportion is higher than 0.1 % by weight, the air-flow resistance increases.

The wet non-woven fabric of the present embodiment can be produced with a known paper-making machine by a known wet paper-making method.

A filter medium of the present embodiment is a filter medium, for a filter, that has a laminate structure in which a long-fiber non-woven fabric and the above-described wet non-woven fabric are stacked. The long-fiber non-woven fabric is disposed on the downstream side of air flow relative to the wet non-woven fabric.

The long-fiber non-woven fabric of the present embodiment is a sheet-like fabric that is formed of fibers such as polyolefin-based fibers, polyester-based fibers, polyamide-based fibers, or polyurethane-based fibers. The long-fiber non-woven fabric is preferably formed of polyester-based fibers. With polyester-based fibers, because of a relatively high rigidity thereof, the strength of the filter medium increases, and it becomes easy to perform pleating. A production method for the long-fiber non-woven fabric is preferably a spunbond method.

The weight per unit area of the long-fiber non-woven fabric of the present embodiment is preferably 5 to 100 g/m² and more preferably 10 to 80 g/m². If the weight per unit area is lower than 5 g/m², the rigidity decreases. Meanwhile, if the weight per unit area is higher than 100 g/m², the following drawbacks occur. That is, in association with increase in the number of fibers, pressure loss increases, and moreover, powder dust retaining spaces between the fibers become less, whereby the amount of powder dust to be retained decreases.

The diameter of each of the fibers forming the long-fiber non-woven fabric of the present embodiment is preferably 3 to 100 µm, more preferably 5 to 80 µm, and further preferably 10 to 60 µm. If the diameter falls within this range, it is possible to prevent increase in pressure loss and obtain a sufficient rigidity.

The orientation of the fibers in the long-fiber non-woven fabric of the present embodiment is not particularly limited, and, for example, the fibers may be oriented randomly, in a crossing manner, or parallelly as long as a non-woven fabric form is obtained.

The thickness of the filter medium of the present embodiment is preferably 0.1 to 3.0 mm. If the thickness is smaller than 0.1 mm, the contexture deteriorates. Meanwhile, if the thickness is larger than 3.0 mm, the thickness of the entire filter medium becomes excessively large, and the structural resistance increases if the filter is formed in a pleated manner. As a result, the air-flow resistance of the entire filter becomes excessively high, and a problem arises in practical use.

In the filter medium of the present embodiment, a granular adsorbent and a binding material (binder) may be held between the long-fiber non-woven fabric and the wet non-woven fabric.

The binder to be held therebetween is preferably formed of a thermoplastic resin, and examples of the thermoplastic resin include polyolefin-based resins, polyamide-based resins, polyester-based resins, ethylene-acrylic copolymer resins, and the like. Although the components of the binder are not particularly limited, polyester-based resins are preferable. The reason is as follows. That is, the long-fiber non-woven fabric is preferably formed of polyester-based fibers as described above, and, if a polyester-based resin which is the same component as the polyester-based fibers is used, a base material layer (the long-fiber non-woven fabric or the wet non-woven fabric) and the binder are firmly bound to each other at the boundary surface therebetween, whereby a high peel strength is obtained.

The thermoplastic resin used for the binder of the filter medium of the present embodiment preferably has, in powder form (granular form), a size of 100 to 300 µm in terms of the average particle diameter. If the average particle diameter of the granular thermoplastic resin (granular binder) is smaller than 100 µm, adhesion force is exerted between the granular adsorbent and the thermoplastic resin owing to the van der Waals force and electrostatic force. Accordingly, the thermoplastic resin cannot actively come into contact with the base material layer, whereby a sufficient peel strength is not obtained. Meanwhile, if the average particle diameter is larger than 300 µm, the thickness of the filter medium becomes large, and the structural resistance of a filter produced by using the binder increases. Thus, an average particle diameter larger than 300 µm is not preferable for practical use.

With respect to the granular adsorbent, the granular binder used for the filter medium of the present embodiment is preferably used in a proportion of 10 to 80% by weight and more preferably used in a proportion of 20 to 60% by weight. The reason is as follows. That is, if the proportion falls within this range, a filter medium that is excellent in adhesive force with the base material layer, pressure loss, and deodorization performance is obtained.

As the granular adsorbent of the filter medium of the present embodiment, an organic porous body represented by a styrenedivinylbenzene crosslinked product can be used besides an inorganic substance such as activated carbon, silica gel, zeolite, or sepiolite. In particular, activated carbon is preferable because a specific surface area thereof is very large.

In the case where activated carbon is used as the granular adsorbent, for example, a coconut husk-based activated carbon, a wood-based activated carbon, a coal-based activated carbon, a pitch-based activated carbon, and the like are preferable. The number of introduction pores to the inside that can be seen by surface observation, i.e., so-called macropores, is preferably large. If the number of macropores is large, even when the surface of the activated carbon is coated with the binder at the time of producing a granule mixture from the activated carbon and the granular binder, pores capable of adsorption can be opened by gas desorption from inside the pores at the time of hot pressing. In addition, if the surface of the activated carbon is rough to some extent, the fluidity of the binder resin that has melted also deteriorates, whereby adsorption performance can be inhibited from decreasing.

In the filter medium of the present embodiment, chemical treatment may be performed on the granular adsorbent for the purpose of improving adsorption performance for polar substances or aldehydes. In the case where the substance to be adsorbed is aldehyde-based gas or an acidic polar substance such as a nitrogen compound such as NOx, a sulfur compound such as SOx, or acetic acid, examples of the chemical to be used for the chemical treatment include amine-based chemical agents such as ethanolamine, polyethyleneimine, aniline, p-anisidine, sulfanilic acid, tetrahydro-1,4-oxazine, and hydrazide compounds. Among the amine-based chemical agents, tetrahydro-1,4-oxazine is preferable. Since tetrahydro-1,4-oxazine can be relatively easily acquired and easily dissolved in water, loading treatment can be easily performed. Apart from the amine-based chemical agents, the following chemicals are suitably used: sodium hydroxide, potassium hydroxide, guanidine carbonate, guanidine phosphate, aminoguanidine sulfate, 5,5-dimethylhydantoin, benzoguanamine, 2,2-iminodiethanol, 2,2,2-nitrotriethanol, ethanolamine hydrochloride, 2-amino ethanol, 2,2-iminodiethanol hydrochloride, p-aminobenzoic acid, sodium sulfanilate, L-arginine, methylamine hydrochloride, semicarbazide hydrochloride, hydrazine, hydroquinone, hydroxylamine sulfate, permanganate, potassium carbonate, potassium hydrogencarbonate, and the like. In the case where the substance to be adsorbed is a basic polar substance such as ammonia, methylamine, trimethylamine, or pyridine, for example, phosphoric acid, citric acid, malic acid, ascorbic acid, tartaric acid, and the like are suitably used. An adsorbent treated with any of these chemicals may be used solely or used by being mixed with an adsorbent that is not subjected to chemical treatment.

The chemical treatment is performed by, for example, causing the chemical to be supported or loaded on the adsorbent. It is also possible to perform, instead of directly treating the adsorbent with the chemical, a method that involves loading treatment around the surface of the filter medium through an ordinary coating process or the like, or loading by impregnating the entire filter medium with the chemical. In this case, it is also possible to perform a method in which: a chemical aqueous solution mixed with a thickener such as sodium alginate or polyethylene oxide is prepared; and the chemical aqueous solution is subjected to supporting and loading. This method is effective in: supporting and loading a chemical having a low solubility into water; and further, inhibiting the chemical from being separated.

The filter medium of the present embodiment may be formed so as to contain, for example, components having additional functions such as an antibacterial agent, an antifungal agent, an antivirus agent, and a flame retardant. These components may be kneaded in the non-woven fabric or fibers or the like forming the base material layer, or may be added by loading and supporting the components in subsequent processing. If, for example, the filter medium is formed so as to contain a flame retardant, a filter medium that conforms to the UL flame retardance standards and the criteria on flame retardance stipulated in FMVSS.302 can be produced.

A filter of the present embodiment in which the filter medium of the present embodiment is used is also included in the present invention. The filter of the present embodiment may be subjected to, for example, pleating or attaching processing to a frame or the like. In addition, the filter of the present embodiment may be formed by combining another material with the filter medium of the present embodiment.

### EXAMPLES

Hereinafter, the present invention will be more specifically described by means of examples. However, the present invention is not limited to the examples. First, a method for measuring physical properties of wet non-woven fabrics and filter mediums for filters used in examples and comparative examples will be described.

### [Surface Irregularity]

Evaluation is conducted by using a friction tester (KES-SE) manufactured by KATO TECH CO., LTD. Each sample (non-woven fabric) fixed to a table is scanned with a contact piece while applying a load of 10 gf at a speed of 1 mm/s. Then, an average deviation from data of detected surface irregularities is regarded as the value of surface roughness (SMD).

### [Average Friction Coefficient]

Evaluation is conducted by using the friction tester (KES-SE) manufactured by KATO TECH CO., LTD. Each sample fixed to the table is scanned with the contact piece while applying a load of 25 gf at a speed of 1 mm/s. Then, an average friction coefficient (MIU) is calculated based on the detection result.

### [Foreign Object Removal Performance]

Each sample is cut into a size of 15 cm-square, JIS15-type powder dust is caused to fall on the sample at 5 m³/min, and the falling is stopped at the time when the air-flow resistance of the sample has increased by 50 Pa from a base value. Evaluation based on the amount of powder dust caught by the sample is made in terms of the weight. Then, the sample having a size of 15 cm-square is set on a jig perpendicularly to a table and caused to fall off from a height of 10 cm ten times. Lastly, the weight of the sample is measured, and the weight of powder dust having fallen off from the sample is obtained. If the weight of the powder dust having fallen off from the sample is 70% of the adhesion amount, the foreign object removal performance is determined to be good (○).

### [Pressure Loss]

Each filter medium is placed in a duct, and air is caused to flow through the filter medium at an air filtering speed of 50 cm/second. Then, a differential pressure gauge is read to obtain the difference in static pressure between the upstream side and the downstream side of the sample, whereby a pressure loss (Pa) is measured.

### [Peel Strength]

The average peel strength between the long-fiber non-woven fabric and the wet non-woven fabric is measured. A test is performed at a tensile strength of 100 mm/minute on each test piece, the size of which is such that the width is 50 mm and the length is 200 mm.

### [Rigidity]

A stiffness in a machine direction is measured according to Method A (Gurley method) of JIS L-1096.

### [Example 1]

Vinylon fibers (17 dtex, average fiber length: 12 mm, average fiber diameter: 40 µm), vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 26:31.25:5.25:11.25:11.25:15. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 1 having a weight per unit area of 40 g/m² and a thickness of 0.3 mm.

Next, a mixed powder of which the weight ratio between a coconut husk activated carbon having an average particle diameter of 200 µm and a polyester-based thermoplastic resin having an average particle diameter of 200 µm was 1:0.5, was dispersed on a downstream side relative to the obtained wet non-woven fabric for Example 1 so as to obtain a weight per unit area of 90 g/m². Furthermore, a polyester-based long-fiber non-woven fabric having a weight per unit area of 20 g/m² was stacked on the dispersed mixed powder. The resultant stack was subjected to a heating process at 140°C to be formed as a sheet, thereby producing a filter medium for a filter for Example 1.

### [Example 2]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 51:7.6:16.2:16.2:9. Furthermore, a polyacrylic acid ester was added while measurement was performed such that the proportion of the weight of the polyacrylic acid ester was 0.05% with respect to the weight of the fibers. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 2 having a weight per unit area of 30 g/m² and a thickness of 0.2 mm.

Next, a filter medium for a filter for Example 2 was produced in the same manner as for Example 1, except that the wet non-woven fabric for Example 2 was used instead of the wet non-woven fabric for Example 1.

### [Example 3]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 45:7.6:16.2:16.2:15. Furthermore, a polyacrylic acid ester was added while measurement was performed such that the proportion of the weight of the polyacrylic acid ester was 0.05% with respect to the weight of the fibers. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 3 having a weight per unit area of 30 g/m² and a thickness of 0.2 mm.

Next, a filter medium for a filter for Example 3 was produced in the same manner as for Example 1, except that the wet non-woven fabric for Example 3 was used instead of the wet non-woven fabric for Example 1.

### [Example 4]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 39:7.6:16.2:16.2:21. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 4 having a weight per unit area of 30 g/m² and a thickness of 0.2 mm.

Next, a filter medium for a filter for Example 4 was produced in the same manner as for Example 1, except that the wet non-woven fabric for Example 4 was used instead of the wet non-woven fabric for Example 1.

### [Example 5]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 45:7.6:16.2:16.2:15. Furthermore, a polyacrylic acid ester was added while measurement was performed such that the proportion of the weight of the polyacrylic acid ester was 0.15% with respect to the weight of the fibers. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Example 5 having a weight per unit area of 30 g/m² and a thickness of 0.2 mm.

Next, a filter medium for a filter for Example 5 was produced in the same manner as for Example 1, except that the wet non-woven fabric for Example 5 was used instead of the wet non-woven fabric for Example 1.

### [Comparative Example 1]

Low-melting polyester fibers (22 dtex, average fiber length: 64 mm, average fiber diameter: 45 µm), low-melting polyester fibers (4.4 dtex, average fiber length: 51 mm, average fiber diameter: 20 µm), and regular polyester fibers (17 dtex, average fiber length: 51 mm, average fiber diameter: 40 µm) were mixed together at a weight ratio of 5:3:2. Then, by thermal bonding the mixed fibers, and as a result, obtaining a thermally bonded non-woven fabric for Comparative Example 1 having a weight per unit area of 65 g/m² and a thickness of 0.2 mm.

Next, a filter medium for a filter for Comparative Example 1 was produced in the same manner as for Example 1, except that the thermally bonded non-woven fabric for Comparative Example 1 was used instead of the wet non-woven fabric for Example 1.

### [Comparative Example 2]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 51:7.6:16.2:16.2:9. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Comparative Example 2 having a weight per unit area of 30 g/m² and a thickness of 0.2 mm.

Next, a filter medium for a filter for Comparative Example 2 was produced in the same manner as for Example 1, except that the wet non-woven fabric for Comparative Example 2 was used instead of the wet non-woven fabric for Example 1.

### [Comparative Example 3]

Vinylon fibers (7 dtex, average fiber length: 10 mm, average fiber diameter: 25 µm), vinylon fibers (2.2 dtex, average fiber length: 6 mm, average fiber diameter: 15 µm), polyester fibers (0.6 dtex, average fiber length: 5 mm, average fiber diameter: 8 µm), polyester fibers (2.2 dtex, average fiber length: 5 mm, average fiber diameter: 15 µm), and PVA fibers (1.1 dtex, average fiber length: 3 mm, average fiber diameter: 10 µm) were mixed together at a weight ratio of 45:7.6:16.2:16.2:15. Furthermore, a polyacrylic acid ester was added while measurement was performed such that the proportion of the weight of the polyacrylic acid ester was 0.0009% with respect to the weight of the fibers. Then, the mixture was dispersed in water with a pulper, thereby preparing an undiluted liquid for wet paper-making.

The undiluted liquid for wet paper-making was subjected to paper-making by a short net type paper-making method, thereby making a wet web. Thereafter, the wet web was gently squeezed with a press roller and dried with a rotary drying drum at 140°C, thereby obtaining a wet non-woven fabric for Comparative Example 3 having a weight per unit area of 30 g/m² and a thickness of 0.2 mm.

Next, a filter medium for a filter for Comparative Example 3 was produced in the same manner as for Example 1, except that the wet non-woven fabric for Comparative Example 3 was used instead of the wet non-woven fabric for Example 1.

Table 1 indicates the results of the evaluations regarding the wet non-woven fabrics and the thermally bonded non-woven fabric for the examples and the comparative examples.

**[Table 1]**

| Item | | Example 1 | Example 2 | Example 3 | Example 4 | Example 5 | Comparative Example 1 | Comparative Example 2 | Comparative Example 3 |
|---|---|---|---|---|---|---|---|---|---|
| Wet non-woven fabric | Material | Vinylon, Polyester, PVA | Vinylon, Polyester, PVA | Vinylon, Polyester, PVA | Vinylon, Polyester, PVA | Vinylon, Polyester, PVA | Polyester | Vinylon, Polyester, PVA | Vinyl on, Polyester, PVA |
| | Production method | Wet paper-making | Wet paper-making | Wet paper-making | Wet paper-making | Wet paper-making | Thermally bonded | Wet paper-making | Wet paper-making |
| | PVA ratio (%) | 15 | 9 | 15 | 21 | 15 | | 9 | 15 |
| | Content ratio of Polyacrylic acid ester (%) | - | 0.05 | 0.05 | - | 0.15 | | - | 0.0009 |
| | Weight per unit area (g/m²) | 30 | 30 | 30 | 30 | 30 | 65 | 30 | 30 |
| | Surface Irregularity | 2.4 | 2.5 | 1.5 | 2.3 | 2.5 | 4.3 | 4.1 | 3.1 |
| | Average Friction Coefficient | 0.1 | 0.13 | 0.04 | 0.1 | 0.14 | | 0.31 | 0.25 |
| | Air-flow resistance (Pa), 30cm/s | 5.5 | 6 | 6 | 9.0 | 8.8 | 5 | 4.5 | 5.6 |
| Foreign Object Removal Performance | | ○ | ○ | ○ | ○ | ○ | × | × | × |

From Table 1, it is found that the foreign object removal performance is excellent if a wet non-woven fabric of which a surface located on the upstream side of air flow has a surface roughness (SMD) of not larger than 2.7 µm is used. That is, a filter in which the wet non-woven fabric for a filter of the present invention is used, can be easily cleaned.

Next, Table 2 indicates the results of the evaluations regarding the filter mediums produced for the examples and the comparative examples. Measurement was performed on each of the filter mediums for Examples 1 to 5 and the filter mediums for Comparative Examples 2 and 3, with the wet non-woven fabric being located on the upstream side of air flow and with the long-fiber non-woven fabric being located on the downstream side of air flow. Meanwhile, measurement was performed on the filter medium for Comparative Example 1, with the thermally bonded non-woven fabric being located on the upstream side of air flow and with the long-fiber non-woven fabric being located on the downstream side of air flow.

**[Table 2]**

| Item | | Example 1 | Example 2 | Example 3 | Example 4 | Example 5 | Comparative Example 1 | Comparative Example 2 | Comparative Example 3 |
|---|---|---|---|---|---|---|---|---|---|
| Wet non-woven fabric | Material | Vinylon, Polyester, PVA | Vinylon, Polyester, PVA | Vinylon, Polyester, PVA | Vinylon, Polyester, PVA | Vinylon, Polyester, PVA | Polyester | Vinylon, Polyester, PVA | Vinylon, Polyester, PVA |
| | Production method | Wet paper-making | Wet paper-making | Wet paper-making | Wet paper-making | Wet paper-making | Thermally bonded | Wet paper-making | Wet paper-making |
| | Weight per unit area (g/m²) | 30 | 30 | 30 | 30 | 30 | 65 | 30 | 30 |
| | Surface Irregularity | 2.4 | 2.5 | 1.5 | 2.3 | 2.5 | 4.3 | 4.1 | 3.1 |
| | Average Friction Coefficient | 0.1 | 0.13 | 0.04 | 0.1 | 0.14 | | 0.31 | 0.25 |
| | Content ratio of Polyacrylic acid ester (%) | - | 0.05 | 0.05 | - | 0.15 | | - | 0.0009 |
| Middle layer | Particle size of Granular activated carbon or Silica gel (µm) | 200 | 200 | 200 | 200 | 200 | 200 | 200 | 200 |
| | Particle size of Granular binder resin (µm) | 200 | 200 | 200 | 200 | 200 | 200 | 200 | 200 |
| | Material of Granular binder resin | EVA | EVA | EVA | EVA | EVA | EVA | EVA | EVA |
| Long-fiber non-woven fabric | Material | Polyester | Polyester | Polyester | Polyester | Polyester | Polyester | Polyester | Polyester |
| | Production method | Spunbond | Spunbond | Spunbond | Spunbond | Spunbond | Spunbond | Spunbond | Spunbond |
| | Weight per unit area (g/m²) | 20 | 20 | 20 | 20 | 20 | 20 | 20 | 20 |
| Performance of Filter mediums | Pressure Loss (Pa) | 38 | 36 | 40 | 39 | 39 | 41 | 39 | 40 |
| | Peel Strength (N) | 3.7 | 3.5 | 3.3 | 3.6 | 3.9 | 2.7 | 3.1 | 3.6 |
| | Rigidity (MD direction) (mg) | 645 | 601 | 632 | 643 | 639 | 438 | 602 | 630 |
| Foreign Object Removal Performance | | ○ | ○ | ○ | ○ | ○ | × | × | × |

From Table 2, it is found that, if a wet non-woven fabric of which the surface located on the most upstream side of air flow has a surface roughness (SMD) of not larger than 2.7 µm is used, the filter medium is excellent in removal of a foreign object.

It should be understood that all of the embodiment and the examples described above are exemplary and not restrictive. Any embodiments and examples obtained by combining, as appropriate, configurations disclosed in the embodiment and the examples are also included in the present invention. That is, the technical scope of the present invention is valid within the scope of the claims and encompasses all changes, modifications, substitutions, and the like that are made within meanings and scopes equivalent to those described in CLAIMS.

### INDUSTRIAL APPLICABILITY

The non-woven fabric for a filter, the filter medium for a filter, and the filter of the present invention are excellent in removal of a foreign object at the time of cleaning, and can be effectively used for/as general filters for use in, for example, automobiles, air cleaners, air conditioners, copying machines, printers, multifunctional OA devices, toilet deodorizers, and the like.

## Claims

1. A wet non-woven fabric for a filter, wherein the wet non-woven fabric comprises vinylon, polyester, and polyvinyl alcohol, and
a surface, of the wet non-woven fabric, that is located on an upstream side of air flow has a surface roughness (SMD) of not larger than 2.7 µm.

2. The wet non-woven fabric for a filter according to claim 1, wherein the surface located on the upstream side of air flow has an average friction coefficient (MIU) of not larger than 0.15.

3. The wet non-woven fabric for a filter according to claim 1 or 2, the wet non-woven fabric comprises 10 to 20% by weight of the polyvinyl alcohol.

4. The wet non-woven fabric for a filter according to any one of claims 1 to 3, the wet non-woven fabric comprises 0.001 to 0.1% by weight of a polyacrylic acid ester.

5. The wet non-woven fabric for a filter according to any one of claims 1 to 5, the wet non-woven fabric comprises a fiber having a length of not longer than 30 mm.

6. A filter in which the wet non-woven fabric for a filter according to any one of claims 1 to 5 is used.

7. A filter medium for a filter having a laminate structure in which a long-fiber non-woven fabric and the wet non-woven fabric for a filter according to any one of claims 1 to 5 are stacked.

8. The filter medium for a filter according to claim 7, wherein the long-fiber non-woven fabric is a spunbonded non-woven fabric.

9. The filter medium for a filter according to claim 8 or 9, wherein an adsorbent is held between the long-fiber non-woven fabric and the wet non-woven fabric.

10. A filter in which the filter medium for a filter according to any one of claims 7 to 9 is used.
